# EUROPÄISCHE PATENTSCHRIFT

(11) **EP 2 157 331 B1**
(45) Veröffentlichungstag und Bekanntmachung des Hinweises auf die Patenterteilung: **16.02.2011**
(21) Anmeldenummer: 08014643.4
(22) Anmeldetag: 18.08.2008
(51) Int. Cl.: F16D 65/21

(54) **Bremsvorrichtung mit exzentrischer Anordnung einer Reibkomponente**
Braking device with eccentric assembly of a friction component
Dispositif de freinage doté d'un agencement excentrique d'un composant à friction

(43) Veröffentlichungstag der Anmeldung: 24.02.2010
(73) Patentinhaber: Siemens Aktiengesellschaft, 80333 München (DE)
(72) Erfinder: Bott, Erich, 97618 Hollstadt (DE); Zerbes, Hans-peter, Dr., 97616 Bad Neustadt (DE)

(56) Entgegenhaltungen:
- WO-A-2006/087017
- DE-A1- 19 646 493
- DE-A1-102005 022 898
- DE-A1-102006 031 674

## Beschreibung

Die vorliegende Erfindung betrifft eine Bremsvorrichtung zum Bremsen eines Rotationskörpers einer elektrischen Maschine, wobei durch den Rotationskörper eine Drehachse vorgegeben ist. Die Bremsvorrichtung weist eine ringförmige erste Reibkomponente und eine zweite Reibkomponente auf, die zum Bremsen an der ersten Reibkomponente reibt.

Bei bislang bekannten Bremsen ist der Bremsenkörper zur Bremsscheibe zentrisch ausgerichtet. Dadurch stehen sich immer die gleichen Flächen von Bremsenkörper und Bremsscheibe gegenüber. Dies führt zu hohem Verschleiß dieser Flächen sowie einer hohen Erwärmung. Des Weiteren ist ein Selbstreinigungseffekt von Verschleißrückständen nicht möglich und die Bremsen zeigen ein langes Einlaufverhalten. Letzteres äußert sich insbesondere darin, dass die sich gegenüberstehenden Flächen von Bremsenkörper und Bremsscheibe einen aufwändigen Einlaufprozess zur Einstellung eines spezifischen Bremsmoments erfordern.

Aus dem Dokument WO 2006/087017 A1 ist eine elektromagnetische Bremse mit einem Permanentmagneten, insbesondere für elektrische Antriebe bekannt. Sie weist einen Bremsenkörper auf, der einen hülsenförmig ausgebildeten Permanentmagneten, einen mit einer Erregerspule versehenen Elektromagneten, einen als Außenpol ausgebildeten Außenring und einen als Innenpol ausgebildeten Innenring umfasst. Eine drehfest mit einer Welle verbundene Ankerscheibe wird durch die Magnetkraft des Permanentmagneten gegen die Kraft von Rückstellfedern an den Bremsenkörper bzw. die Stirnflächen des Außenrings und des Innenrings angezogen. Bei bestromter Erregerspule wird das Permanentmagnetfeld soweit kompensiert, dass die Ankerscheibe mittels Federkraft von dem Bremsenkörper abgehoben und dadurch die Bremse gelüftet wird.

Die Aufgabe der vorliegenden Erfindung besteht somit darin, den Verschleiß der Reibpartner einer Bremsvorrichtung zu reduzieren und den Einlaufprozess zu verkürzen.

Erfindungsgemäß wird diese Aufgabe gelöst, durch eine Bremsvorrichtung zum Bremsen eines Rotationskörpers einer elektrischen Maschine, wobei durch den Rotationskörper eine Drehachse vorgegeben ist, mit einer ringförmigen ersten und einer zweiten Reibkomponente, die zum Bremsen an der ersten Reibkomponente reibt, wobei die erste Reibkomponente exzentrisch zu der Drehachse angeordnet ist.

In vorteilhafter Weise ist es durch die erfindungsgemäße exzentrische Anordnung der ringförmigen Reibkomponente möglich, dass nicht ständig die gleichen Abschnitte der Bremsenflächen zum Bremsen beitragen müssen. Vielmehr werden Flächenabschnitte der Bremsenflächen periodisch genutzt, so dass immer wieder Zeitabschnitte der Nichtnutzung gegeben sind. In diesen Zeitabschnitten der Nichtnutzung kann das jeweilige Bremsenelement abkühlen. Insgesamt erwärmt sich die Bremsenkomponente dann weniger und der Verschleiß der Bremsenflächen wird reduziert. Die exzentrische Bewegung führt darüber hinaus zu einem Selbstreinigungseffekt von Verschleißrückständen.

Entsprechend einer ersten bevorzugten Variante ist die erfindungsgemäße Bremsvorrichtung als permanentmagneterregte Bremse mit elektrischer Spule und Permanentmagnet ausgebildet. Dieser Bremsentyp ermöglicht den Aufbau eines Bremsenkörpers ohne bewegliche Teile, was insbesondere den Verschleiß und den Wartungsaufwand reduziert.

Die erste Reibkomponente kann hierbei einen ringförmigen Außenpol und einen konzentrischen ringförmigen Innenpol aufweisen. Wobei die zweite Reibkomponente den Anker zum Schließen des magnetischen Kreises bildet. Durch den geschlossenen Magnetkreislauf kann hohe magnetische Kraft auf den Anker ausgeübt werden.

Weiterhin kann die zweite Reibkomponente ebenfalls ringförmig ausgebildet sein. Dadurch lässt sich die Bremskraft möglichst gleichförmig am Umfang verteilen.

Ferner kann die erfindungsgemäße Bremsvorrichtung einen Flansch aufweisen, mit dem der Rotationskörper drehfest verbindbar und mit dem die zweite Reibkomponente drehfest verbunden ist. Mit dem Flansch lässt sich die Bremse beispielsweise ohne hohen Aufwand auf die Welle eines Motors schrumpfen.

In einer zweiten Variante kann die erfindungsgemäße Bremsvorrichtung als Federdruckbremse ausgebildet sein. Diese zeichnet sich durch ein sehr einfaches Wirkungsprinzip aus. Die Bremse wird dabei in der Regel durch eine elektrische Spule gelöst, bleibt aber im unbestromten Zustand der Spule in der Bremsstellung. Die erste Reibkomponente kann an einem Flansch angebracht sein, an dem der Rotationskörper drehfest montierbar ist. Wie oben bereits erwähnt, ermöglicht ein derartiger Flansch das Aufschrumpfen beispielsweise auf eine Welle eines Elektromotors. Insbesondere kann die zweite Reibkomponente ringförmig ausgebildet sein, und die erste Reibkomponente zwei axial gegenüberliegende Reibflächen aufweisen, wobei eine dieser Reibflächen zum Bremsen an eine dritte Reibkomponente gedrückt wird. Die dritte Reibkomponente, die in der Regel am Gehäuse der Bremsvorrichtung befestigt sein wird, kann so die Axialkraft der Bremse aufnehmen.

Vorzugsweise besitzt die erste Reibkomponente einen Anker eines magnetischen Kreises, an den auch eine Feder angreift, um den Anker entgegen der Wirkung des magnetischen Kreises an die zweite Reibkomponente zu drücken. Damit erfüllt der Anker die Funktionen einer Reibkomponente des Schließens des Magnetkreises und des Aufnehmens der Federkraft und wird somit multifunktionell verwendet.

Die vorliegende Erfindung wird nun anhand der beigefügten Zeichnungen näher erläutert, in denen zeigen:
- FIG 1: einen Querschnitt durch eine PE-Bremse (permanentmag- neterregte Bremse);
- FIG 2: einen Querschnitt durch eine Federdruckbremse; und
- FIG 3: die axial aufeinander projizierten Reibflächen der Reibpartner einer erfindungsgemäßen Bremse.

Die nachfolgend näher geschilderten Ausführungsbeispiele stellen bevorzugte Ausführungsformen der vorliegenden Erfindung dar.

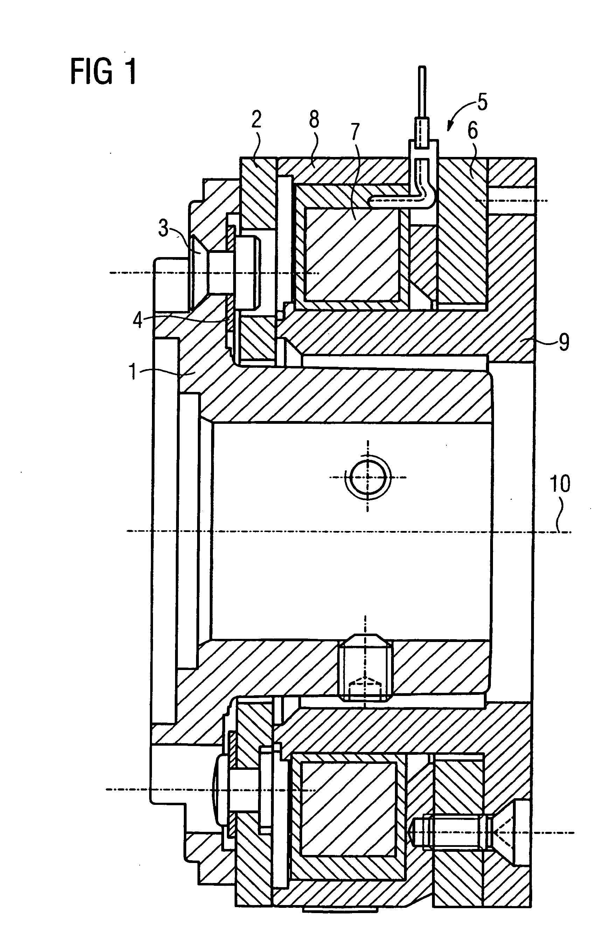

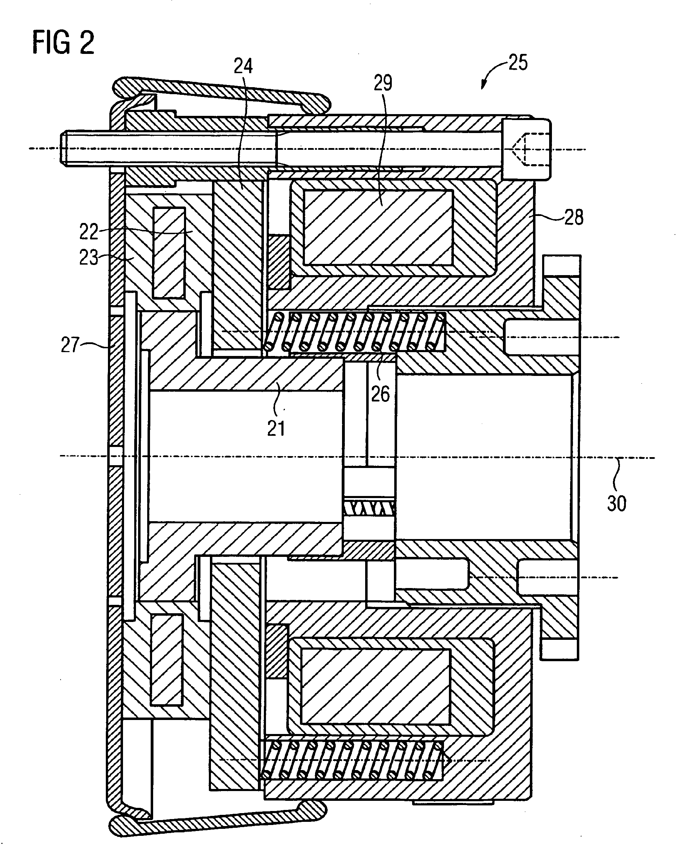

Zur näheren Erläuterung der Erfindung wird anhand der Figuren 1 und 2 jeweils das Prinzip einer PE-Bremse und einer Federdruckbremse beschrieben.

Die in FIG 1 im Querschnitt dargestellte PE-Bremse besitzt einen Flansch 1, der auf die Welle beispielsweise eines Elektromotors aufgeschrumpft werden kann. An den Fuß des Flansches 1 ist ein Ankerring 2 montiert. Speziell ist der Ankerring 2 hier mit Hilfe von Nieten 3 und Federn 4 so an dem Fuß des Flansches 1 befestigt, dass er sich geringfügig in axialer Richtung von diesem abheben lässt. Dem Ankerring 2 steht axial ein ringförmiger Bremsenkörper 5 gegenüber. Der Bremsenkörper 5 besitzt einen Permanentmagneten 6 und eine Spule 7. Die Spule 7 ist von einem Außenring 8 umgeben, der einen Außenpol bildet. Ein flanschartiger Innenring 9 liegt innen an der Spule 7 und dem bzw. den Permanentmagneten 6 an. Der Innenring bildet einen Innenpol, der radial innerhalb des Außenrings 8 liegt. Der Flanschfuß des Innenrings 9 bildet das Joch für die Pole.

Über den Außenring 8, den Innenring 9 und den Ankerring 2 bilden sich geschlossene Magnetkreisläufe aus. Ist die Spule 7 unbestromt, so bewirkt der durch den Permanentmagneten 6 hervorgerufene Magnetfluss ein Anziehen des Ankerrings 2 auf den Außenpol 8 und den Innenpol 9 entgegen der Federkraft der Feder 4. Der sich drehende Ankerring 2 reibt damit an dem Außenring 8 und dem Innenring 9, die üblicherweise an einem Motorgehäuse bzw. Lagerschild befestigt sind, so dass die Reibpartner bzw. Reibkomponenten zusammen ein Bremsmoment erzeugen.

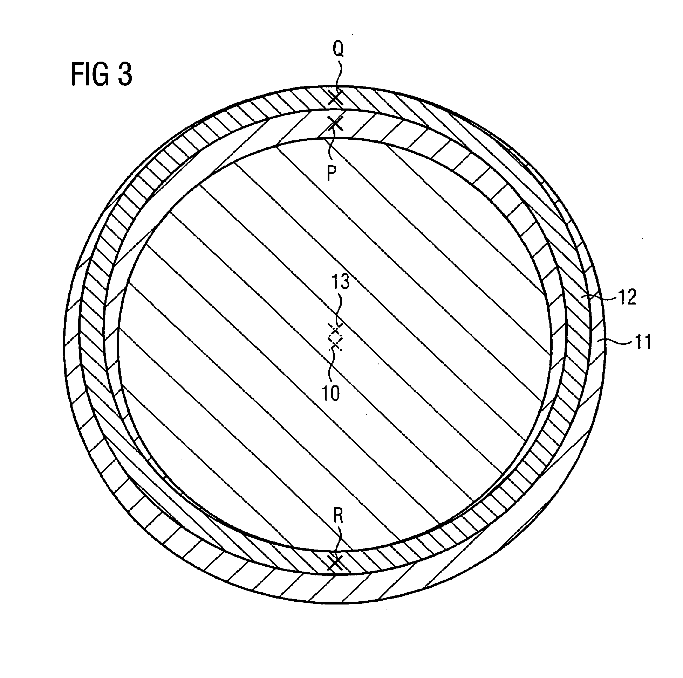

Bei der hier vorgestellten Bremse sind der Ankerring 2, der Außenring 8 und der Innenring 9 jeweils ringförmig ausgebildet. Bei bekannten Bremsen dieses Typs sind die Ringe zueinander konzentrisch angeordnet. Dadurch ergibt sich die geschilderte hohe Erwärmung und der erhöhte Verschleiß. Erfindungsgemäß ist daher vorgesehen, dass der Bremsenkörper 5 bezogen auf die Rotationsachse 10 des Flansches 1 exzentrisch angeordnet ist. Aus FIG 1 ist dies nicht zu entnehmen. In FIG 3 sind jedoch schematisch die Flächen der Reibpartner einer Bremse (die Flächen symbolisieren also die Reibkomponenten), axial aufeinander projiziert dargestellt. Die breite Ringfläche 11 repräsentiert hier beispielsweise den Ankerring 2. Die schmale Ringfläche 12 hingegen repräsentiert beispielsweise den Außenring 8. Es ist zu erkennen, dass die Rotationsachse 10, die das Zentrum der Ringfläche 11 bildet, gegenüber dem Zentrum 13 der schmäleren Ringfläche 12 etwas versetzt ist. Dies bedeutet, dass der Außenring 8 bzw. der Bremskörper 5 gegenüber dem Ankerring 2 bzw. dem Flansch 1 exzentrisch angeordnet ist. Dreht sich nun der Ankerring 2, d.h. symbolisch die breite Ringfläche 11 unter der schmalen Ringfläche 12, so trägt beispielsweise ein Punkt P, der sich im inneren Drittel der Ringfläche 11 befindet, in der 12-Uhr-Stellung nicht zu einem Bremsmoment bei. Erst etwa von einer 4-Uhr-Stellung bis zu einer 8-Uhr-Stellung gerät der Punkt P unter die schmälere Ringfläche 12, so dass er zur Bremswirkung beitragen kann.

Generell kann festgestellt werden, dass derjenige Bereich der breiteren Ringfläche 11, der nicht von der schmäleren Ringfläche 12 abgedeckt wird, nicht zur Bremswirkung beiträgt. Folglich kann sich dieser Bereich der Bremse abkühlen. Nur diejenigen Bereiche unterhalb der schmalen Ringfläche 12 tragen zur Bremswirkung bei. Da jedoch sämtliche Bereiche der breiteren Ringfläche 11 während einer Umdrehung unter der schmäleren Ringfläche 12 hindurch gedreht werden, tragen im Laufe einer Umdrehung sämtliche Abschnitte der breiten Ringfläche 11 bzw. des Ankerrings 2 zur Bremswirkung bei.

Wichtig für die Funktion der Exzentrizität ist, dass ein Reibpartner ringförmig ausgebildet ist. Bei der PE-Bremse entsprechend dem Beispiel von FIG 1 sind dies die Pole repräsentiert durch die Ringe 8 und 9. Der Bremsenkörper 5 ist in dem konkreten Beispiel also exzentrisch zur Welle im Gehäuse von Motor, Getriebe oder Winde befestigt. Bei ausreichender Exzentrizität z.B. doppelte Breite des Außenpols 8 bzw. der Ringfläche 12 oder Differenz der Ringbreiten der Ringe 2 und 8 bzw. der Ringflächen 11 und 12, entsteht keine durchgängige ringförmige Schleifspur auf der Bremsscheibe. Der Verschleiß kann durch die Exzentrizität damit vermindert werden.

In FIG 2 ist eine Federdruckbremse im Querschnitt wiedergegeben. Ein Flansch 21 dient wie der Flansch 1 vom Beispiel von FIG 1 zur Aufnahme einer Welle bzw. zum Aufschrumpfen auf die Welle. Am Flanschfuß sind an beiden axialen Seiten jeweils ein Reibbelag 22, 23 angebracht. Die Reibbeläge 22 und 23 können auch einteilig miteinander verbunden sein. Ein Anker 24 eines Bremskörpers 25 wird durch eine Feder 26 auf den Reibbelag 22 gedrückt. Auf der gegenüberliegenden axialen Seite wird der Reibbelag 23 gegen eine Reibscheibe 27 gedrückt, die einen dritten Reibpartner darstellt. Da die Reibscheibe 27 über das Gehäuse 28 der Federdruckbremse fest mit dem Stützpunkt der Feder 26 verbunden ist, nimmt die Reibscheibe 27 die Kraft der Feder 26 auf. Die Bremse kann durch einen Elektromagneten gelüftet werden. Dieser besteht hier aus einem ringförmigen Kern 28, in dem eine Spule 29 untergebracht ist. Der ringförmige Kern 28 besitzt hierzu ein entsprechendes U-Profil. Die Schenkelenden des U-Profils stellen die Pole des Elektromagneten dar. Sie ziehen den Ankerring 24 gegen die Kraft der Feder 26 bzw. mehrerer am Umfang verteilter Federn an, sobald die Spule 29 bzw. entsprechend mehrere Spulen bestromt werden.

Es ist nicht zwangsläufig notwendig, dass der Ankerring 24 ringförmig ausgebildet ist. Vielmehr kann der Anker des Elektromagneten auch beispielsweise rechteckförmig gebildet sein.

Herkömmlich ist der Flansch 21 mit seinen ringförmigen Reibbelägen 22 und 23 sowie der Ankerring 24 konzentrisch mit der Drehachse 30 einer Motorwelle ausgebildet. Dadurch ergibt sich auch hier der hohe Verschleiß an den Reibflächen. Erfindungsgemäß wird daher der sich drehende Reibpartner, hier der Flansch 21, mit den Reibbelägen 22 und 23 exzentrisch gegenüber der Drehachse 30 ausgebildet. Da sich der Flansch 21 dennoch um die Rotationsachse 30 dreht, überstreichen die Reibflächen der Reibbeläge 22 und 23 eine deutlich größere Fläche auf dem Ankerring 24 als ihre Eigenfläche.

Die Bewegung der Reibfläche 22 gegenüber dem Ankerring 24 bzw. der Reibfläche 23 gegenüber der Reibscheibe 27 kann wiederum anhand von FIG 3 erläutert werden. Wiederum entspricht die breitere Ringfläche 11 dem Ankerring 24. Die schmälere Ringfläche 12 entspricht dem Reibbelag 22. In diesem Beispiel dreht sich jedoch nicht die breitere Ringfläche 11, sondern die schmälere Ringfläche 12 und zwar um die Drehachse 10 und nicht um ihr eigenes Zentrum 13. Damit überstreicht ein Punkt Q, der sich auf der schmalen Ringfläche 12 befindet und der von der Drehachse 10 am weitesten entfernt ist, die breite Ringfläche 11 stets in ihrem Außenbereich. Demgegenüber überstreicht ein Punkt R, der sich ebenfalls auf der schmalen Ringfläche 12 befindet und der zu der Drehachse 10 am nächsten liegt stets einen Innenbereich der breiten Ringfläche 12. Für die Erläuterungen wurden hier Punkte Q, R gewählt, die radial mittig auf dem Ring liegen.

Bei einer vollen Umdrehung des Flansches 21 bzw. der Ringfläche 12 werden also wieder sämtliche Bereiche der breiteren Ringfläche 11 von der schmäleren Ringfläche überstrichen. Die Teilabschnitte der breiteren Ringfläche 11 tragen wie in dem Beispiel von FIG 1 somit in regelmäßigen periodischen Abständen zur Bremswirkung bei. In den Zeitfenstern, in denen sie nicht zum Bremsen beitragen, können sich die entsprechenden Abschnitte abkühlen. Der Verschleiß und die Erwärmung werden dadurch ebenfalls reduziert. Mit anderen Worten die beiden Ringflächen besitzen unterschiedliche Zentren und einer der Reibpartner muss sich um das Zentrum der breiteren Ringfläche bzw. der Rotationsachse der Welle drehen.

Gemäß dem obigen Beispiel ist die Bremsscheibe bzw. der Flansch 21 mit dem ringförmigen Reibbelag 22 bzw. 23 exzentrisch auf der jeweiligen Welle (in FIG 2 nicht dargestellt) befestigt. (Gegebenenfalls ist an der Welle bzw. dem Flansch ein Ausgleichsgewicht zur Vermeidung von Unwucht anzubringen.) Alternativ dazu kann auch der ringförmige schmälere Reibbelag exzentrisch an dem Anker bzw. dem Ankerring 24 befestigt werden. Der ringförmige Reibbelag würde dann an dem Fuß des Flansches 21 reiben. Analog hierzu könnte auch an der Scheibe 27 ein ringförmiger Reibbelag exzentrisch angeordnet werden, der ebenfalls beim Bremsen an dem Flansch 21 reibt. Im Hinblick auf FIG 3 würde dann die breitere Ringfläche 11 einer Fläche auf dem Fuß des Flansches 21 entsprechen. Diese Ringfläche 11 dreht sich um die Drehachse 10. Der ringförmige Reibbelag 12 an dem Ankerring 24 und/oder der Scheibe 27 würde der schmäleren Ringfläche entsprechen, die sich hier nicht dreht. Es ergäben sich somit Verhältnisse wie bei dem Beispiel gemäß FIG 1, bei dem sich ebenfalls die breitere Ringfläche 11 unter der schmäleren Ringfläche 12 hindurchdreht. Generell kann damit festgestellt werden, dass entsprechend dem Gedanken der Erfindung Verhältnisse realisiert werden müssen, bei denen sich eine breite Ringfläche unter bzw. über einer schmäleren exzentrischen Ringfläche dreht, oder dass sich eine schmälere Ringfläche unter/auf einer breiteren Ringfläche um die Achse der breiteren Ringfläche dreht.

Beispielsweise fällt nicht unter dieses erfindungsgemäße Prinzip, wenn bei dem Aufbau von FIG 2 nur der Bremskörper 25 exzentrisch angeordnet wäre. Dann würde sich die schmale Ringfläche 12 um ihre eigene Achse auf der breiteren Ringfläche drehen. Sie würde dabei nie die feste Reibfläche verlassen und es ergäben sich Verhältnisse wie bei herkömmlichen Bremsen.

Entsprechend der vorliegenden Erfindung ergeben sich somit die Vorteile, dass sich die beanspruchte Reibfläche der jeweiligen Reibscheibe erhöht, dass sich die Kühlung der Reibflächen verbessert und dass sich der Verschleiß verringert. Darüber hinaus verbessert sich auch das Einlaufverhalten und es entsteht ein Selbstreinigungseffekt, weil die Reibflächen über die Kanten des Reibpartners laufen.

## Patentansprüche

1. Bremsvorrichtung zum Bremsen eines Rotationskörpers einer elektrischen Maschine, wobei durch den Rotationskörper eine Drehachse (10,30) vorgegeben ist, mit
- einer ringförmigen ersten Reibkomponente (12) und
- einer zweiten Reibkomponente (11), die zum Bremsen an der ersten Reibkomponente (12) reibt,
**dadurch gekennzeichnet, dass**
- die erste Reibkomponente (12) exzentrisch zu der Drehachse (10, 30) angeordnet ist.

2. Bremsvorrichtung nach Anspruch 1, die als permanentmagneterregte Bremse mit elektrischer Spule (7) und Permanentmagnet (6) ausgebildet ist.

3. Bremsvorrichtung nach Anspruch 2, wobei die erste Reibkomponente (12) einen ringförmigen Außenpol (8) und einen konzentrischen, ringförmigen Innenpol (9) aufweist, und wobei die zweite Reibkomponente (11) den Anker (2) zum Schließen des magnetischen Kreises bildet.

4. Bremsvorrichtung nach einem der vorhergehenden Ansprüche, wobei die zweite Reibkomponente (11) ringförmig ausgebildet ist.

5. Bremsvorrichtung nach Anspruch 4, die einen Flansch (1) aufweist, mit dem der Rotationskörper drehfest verbindbar und mit dem die zweite Reibkomponente (11) drehfest verbunden ist.

6. Bremsvorrichtung nach Anspruch 1, die als Federdruckbremse ausgebildet ist.

7. Bremsvorrichtung nach Anspruch 6, wobei die erste Reibkomponente (12) an einem Flansch (21) angebracht ist, an dem der Rotationskörper drehfest montierbar ist.

8. Bremsvorrichtung nach Anspruch 6 oder 7, wobei die zweite Reibkomponente (11) ringförmig ausgebildet ist, und die erste Reibkomponente (11) zwei axial gegenüberliegende Reibflächen aufweist, und wobei eine dieser Reibflächen zum Bremsen an eine dritte Reibkomponente (24) gedrückt wird.

9. Bremsvorrichtung nach einem der Ansprüche 6 bis 8, wobei die erste Reibkomponente (12) einen Anker (24) eines magnetischen Kreises aufweist, an den auch eine Feder (26) angreift, um den Anker (24) entgegen der Wirkung des magnetischen Kreises an die zweite Reibkomponente (11) zu drücken.

## Claims

1. Braking apparatus for braking a rotary body of an electrical machine, with a rotation axis (10, 30) being predefined by the rotary body, having
- an annular first friction component (12) and
- a second friction component (11) which rubs against the first friction component (12) for braking purposes, **characterized in that**
- the first friction component (12) is arranged eccentrically in relation to the rotation axis (10, 30).

2. Braking apparatus according to Claim 1, which is in the form of a brake, with permanent-magnet excitation, having an electrical coil (7) and a permanent magnet (6).

3. Braking apparatus according to Claim 2, with the first friction component (12) having an annular external pole (8) and a concentric, annular internal pole (9), and with the second friction component (11) forming the armature (2) for closing the magnetic circuit.

4. Braking apparatus according to one of the preceding claims, with the second friction component (11) being of annular design.

5. Braking apparatus according to Claim 4, which has a flange (1) to which the rotary body can be connected in a rotationally fixed manner, and to which the second friction component (11) is connected in a rotationally fixed manner.

6. Braking apparatus according to Claim 1, which is in the form of a spring-operated brake.

7. Braking apparatus according to Claim 6, with the first friction component (12) being fitted to a flange (21) on which the rotary body can be mounted in a rotationally fixed manner.

8. Braking apparatus according to Claim 6 or 7, with the second friction component (11) being of annular design, and the first friction component (11) having two friction surfaces which are situated axially opposite one another, and with one of these friction surfaces being pressed against a third friction component (24) for braking purposes.

9. Braking apparatus according to one of Claims 6 to 8, with the first friction component (12) having an armature (24) of a magnetic circuit, a spring (26) also acting on the said armature in order to press the armature (24) against the second friction component (11) in opposition to the action of the magnetic circuit.

## Revendications

1. Dispositif de freinage pour freiner une pièce de révolution d'une machine électrique, un axe ( 10, 30 ) de rotation étant prescrit par la pièce de révolution, comprenant
- un premier élément ( 12 ) de friction annulaire, et
- un deuxième élément ( 11 ) de friction, qui frotte sur le premier élément ( 12 ) de friction pour le freinage, **caractérisé en ce que**
- le premier élément ( 12 ) de friction est disposé de manière excentrée par rapport à l'axe ( 10, 30 ) de rotation.

2. Dispositif de freinage suivant la revendication 1, qui est constitué en frein à excitation par un aimant permanent, ayant une bobine ( 7 ) électrique et un aimant ( 6 ) permanent.

3. Dispositif de freinage suivant la revendication 2 dans lequel, le premier élément ( 12 ) de friction a un pôle ( 8 ) extérieur annulaire et un pôle ( 9 ) intérieur annulaire concentrique et dans lequel le deuxième élément ( 11 ) de friction forme la culasse ( 2 ) de fermeture du circuit magnétique.

4. Dispositif de freinage suivant l'une des revendications précédentes, dans lequel le deuxième élément ( 11 ) de friction est constitué sous forme annulaire.

5. Dispositif de freinage suivant la revendication 4, qui a une bride ( 1 ) par laquelle la pièce de révolution peut être rendue solidaire en rotation et par laquelle le deuxième élément ( 11 ) de friction est solidarisé en rotation.

6. Dispositif de freinage suivant la revendication 1, qui est constitué sous la forme d'un frein à pression par ressort.

7. Dispositif de freinage suivant la revendication 6 dans lequel, le premier élément ( 12 ) de friction est mis sur une bride ( 21 ) sur laquelle la pièce de révolution peut être montée en étant solidaire en rotation.

8. Dispositif de freinage suivant la revendication 6 ou 7 dans lequel, le deuxième élément ( 11 ) de friction est constitué de manière annulaire et le premier élément ( 11 ) de friction a deux surfaces de friction opposées axialement et dans lequel l'une de ces surfaces de friction est repoussée sur un troisième élément ( 24 ) de friction pour le freinage.

9. Dispositif de freinage suivant l'une des revendications 6 à 8, dans lequel le premier élément ( 12 ) de friction comporte une culasse ( 14 ) d'un circuit magnétique qu'attaque aussi un ressort ( 26 ) pour repousser la culasse ( 24 ) sur le deuxième élément ( 11 ) de friction à l'encontre de l'action du circuit magnétique.
